# EUROPÄISCHE PATENTSCHRIFT

(11) **EP 2 742 548 B1**
(45) Veröffentlichungstag und Bekanntmachung des Hinweises auf die Patenterteilung: **01.07.2015**
(21) Anmeldenummer: 12743389.4
(22) Anmeldetag: 01.08.2012
(51) Int. Cl.: H01M 2/10, H01M 2/20, H01M 10/052

(54) **VERFAHREN ZUM BAUEN EINER ENERGIEVERSORGUNGSEINRICHTUNG SOWIE MODUL**
METHOD FOR CONSTRUCTING AN ENERGY SUPPLY DEVICE, AND MODULE
PROCÉDÉ DE CONSTRUCTION D'UN DISPOSITIF D'ALIMENTATION EN ÉNERGIE, AINSI QUE MODULE CORRESPONDANT

(30) Priorität: 10.08.2011 DE 102011109918
(43) Veröffentlichungstag der Anmeldung: 18.06.2014
(73) Patentinhaber: Audi AG, 85045 Ingolstadt (DE)
(72) Erfinder: SCHMIDT, Jörg, 85057 Ingolstadt (DE); HINTERBERGER, Michael, 85055 Ingolstadt (DE); ACIKGOEZ, Erdal, 85084 Reichertshofen (DE); STÖCKERT, Diana, 85055 Ingolstadt (DE); AVDIC, Reuf, 85055 Ingolstadt (DE)
(74) Vertreter: Herbst, Matthias Heinz
(86) Internationale Anmeldenummer: PCT/EP2012/003268
(87) Internationale Veröffentlichungsnummer: WO 2013/020666

(56) Entgegenhaltungen:
- EP-A2- 1 487 034
- EP-A2- 2 065 963
- DE-A1-102009 040 128
- US-A1- 2004 197 642

## Beschreibung

Die Erfindung betrifft ein Verfahren zum Bauen einer Energieversorgungseinrichtung mit einer Mehrzahl von Lithium-Ionen-Batteriezellen, also einer Hochvolt-Energieversorgungseinrichtung. Der Hochvoltbereich beginnt bei oberhalb von 60 V. Es geht vorliegend insbesondere um eine Anwendung der Energieversorgungseinheit als Hochvoltbatterie in einem Elektro- oder Hybridfahrzeug, also einem Kraftfahrzeug mit elektrischem Antrieb. Dort haben Hochvoltbatterien typischerweise einen Spannungsbereich von zwischen 250 und 600 V. Die Erfindung betrifft auch ein Modul aus einer Mehrzahl von Lithium-Ionen-Batteriezellen sowie ein Kraftfahrzeug mit einer Mehrzahl von solchen Modulen.

Die DE 10 2009 040 128 A1 beschreibt ein Batteriepack mit einer Mehrzahl von Lithium-Ionen-Batteriezellen. Die Pluspole der Batteriezellen sind mittels eines Ableiters in Form einer Kupfer-Platte mechanisch miteinander verbunden und hierbei parallel zueinander geschaltet. Mittels eines weiteren Ableiters, welcher mit den Minuspolen der Batteriezellen verschweißt ist, sind die Minuspole miteinander verbunden.

Die EP 2 065 963 A2 beschreibt eine Batterie für ein Fahrzeug mit vier Batterieeinheiten, in welchen einzelne Batteriezellen in Reihen angeordnet sind. Aneinander angrenzende Batteriezellen können hierbei mittels Stromschienen elektrisch parallel geschaltet sein. Die Batteriezellen sind als Lithium-Ionen-Batteriezellen ausgebildet.

Die EP 1 487 034 A2 beschreibt eine Batterie mit einer Mehrzahl von Batteriemodulen. Die elektrischen Anschlüsse der einzelnen Batteriemodule sind in der Batterie mittels Stromschienen miteinander verbunden. In den einzelnen Batteriemodulen sind im Ausführungsbeispiel fünf Batteriezellen mittels einer Verbindungsschiene elektrisch parallel geschaltet. Zwei solche Fünfergruppen von Batteriezellen sind in einem Batteriegehäuse übereinander angeordnet, wobei jeweils übereinander angeordnete Batteriezellen über ihre einander zugewandten Polanschlüsse elektrisch seriell miteinander verbunden sind.

Die US 2004/0197642 A1 beschreibt ein Batteriepack mit einem rechteckigen Gehäuse, in welchem zwei Dreiergruppen von Batteriezellen angeordnet sind. Jeweilige Stromschienen sind hierbei mit den negativen Polen der Batteriezellen verbunden. Eine weitere, U-förmig gebogene Stromschiene ist mit den positiven Polen der sechs Batteriezellen verschweißt. Somit sind in dem Batteriepack die Batteriezellen miteinander mechanisch verbunden und hierbei parallel geschaltet.

Heutige Hochvoltbatterien in Kraftfahrzeugen werden gebaut, indem einzelne Lithium-Ionen-Batteriezellen parallel oder in Reihe miteinander verbunden werden. Die Zellen werden von einem Hersteller bezogen, der die Zellspannung, die Kapazität und die volumetrische Energiedichte der Zellen vorgibt, und hierzu auch die Kontaktierungsmethode. Dies bedeutet für einen Kraftfahrzeughersteller, dass man von solchen Vorgaben abhängig ist, insbesondere auch bei der Gestaltung von Elektro- und Hybridfahrzeugen.

Da für den Bau einer Hochvoltbatterie 500 und mehr Lithium-Ionen-Batteriezellen benötigt werden, die sämtlich miteinander elektrisch verbunden werden müssen, ergeben sich große Herausforderungen, was das Auffinden einer optimalen Verbindungstechnik sowie das Umsetzen einer effizienten Kühlung im Fahrzeug betrifft.

Bei der Fertigung der Batterie muss zudem gewährleistet sein, dass die die Batterie zusammenbauenden Personen nicht durch die hohe Spannung in Gefahr bezüglich ihrer Gesundheit geraten.

Der zur Verfügung stehende Bauraum für die Batterie in einem Kraftfahrzeug gibt in der Regel vor, welche Energiedichte mit dem Kraftfahrzeug realisiert werden kann. Hier gilt es, möglichst den optimalen Wert für die Energiedichte aufzufinden.

Zum Zwecke der leichteren Überwachung von Lithium-Ionen-Batteriezellen schlägt die DE 20 2010 013 724 U1 ein sog. Batteriepack für Elektrofahrzeuge vor, das zumindest ein Batteriemodul aufweist. Jedes Batteriemodul weist eine Vielzahl von Batteriezellen in einem Gehäuse auf und zusätzlich eine Batteriemanagementeinrichtung, welche dazu eingerichtet ist, diese Vielzahl von Batteriezellen anzusteuern und/oder zu überwachen. Hier trägt man der Tatsache Rechnung, dass Reihenschaltungen von Batteriezellen der Überwachung bedürfen.

Auch die WO 2007/091759 A1 beschreibt ein Batteriemodul mit vorliegend zwei Batteriezellen, die in Reihe zueinander geschaltet sind. Die Ausgestaltung ist dergestalt, dass eine elektrische Verbindung einzelner Batteriemodule untereinander auf einfache Weise erfolgen kann, damit ein mittelgroßes oder sehr großes Batteriemodul aufgebaut werden kann, bei dem die einzelnen Batteriemodule mit jeweils zwei Batteriezellen als Grundlage verwendet werden.

Es ist eine Aufgabe der vorliegenden Erfindung, den Bau einer Energieversorgungseinrichtung mit einer Mehrzahl von Lithium-Ionen-Batteriezellen zu vereinfachen, also insbesondere die oben geschilderten Probleme zu vermeiden oder zu verringern, um den zur Verfügung stehenden Bauraum, insbesondere in einem Fahrzeug, optimal auszunutzen.

Diese Aufgabe wird in einem Aspekt durch ein Verfahren mit den Merkmalen gemäß Patentanspruch 1 gelöst, in einem anderen Aspekt durch ein Modul mit den Merkmalen gemäß Patentanspruch 3 gelöst, und schließlich gehört zur Lösung das Bereitstellen eines Kraftfahrzeugs mit den Merkmalen gemäß Patentanspruch 5.

Bei dem erfindungsgemäßen Verfahren werden Teilgruppen der Lithium-Ionen-Batteriezellen jeweils zu einem Modul zusammengefasst, in dem diese Lithium-Ionen-Batteriezellen der Teilgruppe zumindest zum Teil und bevorzugt sämtlich miteinander mechanisch verbunden und hierbei parallel zueinander geschaltet sind. Sodann werden alle Module miteinander gekoppelt, um die Energieversorgungseinrichtung zu bilden.

Bei dem erfindungsgemäßen Verfahren werden zumindest zwei Lithium-Ionen-Batteriezellen in einem Gehäuse bei einer Sollstellung (für ein Kraftfahrzeug in einer Solleinbaulage) desselben übereinander angeordnet. Die elektrische Verschaltung wird durch zumindest eine Stromschiene bereitgestellt. Hierbei werden zwei Stromschienen so angeordnet, dass sie von der Oberseite der einen dieser beiden Lithium-Ionen-Batteriezellen zu der Oberseite der anderen der beiden Lithium-Ionen-Batteriezellen verlaufen.

Bei Verwendung einer Parallelschaltung von Lithium-Ionen-Batteriezellen erhöht man die Nennspannung des Moduls nicht durch diese Parallelschaltung, und bei geeigneter Wahl der Anzahl an parallel geschalteten Lithium-Ionen-Batteriezellen lässt sich ein dichtes und größeres Batterie-Modul schaffen, das eine höhere Kapazität aufweist als die einzelnen Lithium-Ionen-Batteriezellen. Dabei kann die Bauform des Moduls so ausgelegt werden, dass der vorhandene Platz im Fahrzeug optimal ausgenutzt werden kann.

Durch den Einsatz von solchen Modulen, die zumindest eine Parallelschaltung umfassen oder ausschließlich eine Parallelschaltung von Lithium-Ionen-Batteriezellen umfassen, wird durch die geeignete Bereitstellung der größeren Kapazität die Flexibilität in der Gestaltung der Hochvolt-Batterie in einem Kraftfahrzeug oder außerhalb eines solchen maßgeblich erhöht.

Der modulare Aufbau ermöglicht es auch, beliebige Lithium-Ionen-Batteriezellen von beliebigen Lieferanten in das Modul einzubauen, die unterschiedliche Eigenschaften haben mögen; das Modul kann dennoch eine vorbestimmte Eigenschaft haben, die unabhängig von dem verwendeten Batteriezellentypus ist.

Der modulare Aufbau ermöglicht auch die gewünschte Vereinfachung bei der Montage, genauso wie auch eine solche bei der Demontage. Weil die Lithium-lonen-Batteriezellen in den einzelnen Modulen bereits vorab miteinander verbunden worden sind, lässt sich die Verbindungstechnik, was die Verbindung zwischen den einzelnen Modulen angeht, einfacher gestalten als bei der bisherigen Verbindung von einzelnen Batteriezellen. Somit lässt sich der Aufbau der gesamten Hochvolt-Batterie etwa mit einfachem Schrauben realisieren.

Wie bereits ausgeführt, ist die Energieversorgungseinrichtung bevorzugt Teil eines Kraftfahrzeugs. Alternativ hierzu kann die Energieversorgungseinrichtung außerhalb eines Kraftfahrzeugs eingesetzt werden, beispielsweise als Ladestation für ein solches oder zur Verwendung in der Haustechnik. Die Erfindung ist überall dann sinnvoll einsetzbar, eben insbesondere in einem Kraftfahrzeug, wo der Bauraum begrenzt und von Fall zu Fall unterschiedlicher Form sein mag.

Das erfindungsgemäße Modul aus einer Mehrzahl von Lithium-Ionen-Batteriezellen beinhaltet, dass diese Lithium-Ionen-Batteriezellen nicht nur mechanisch miteinander verbunden sind, sondern hierbei auch elektrisch parallel geschaltet sind. Auf diese Weise ist durch das Modul, wie oben bereits zum erfindungsgemäßen Verfahren ausgeführt, verwirklichbar, dass höhere Kapazitäten bereitgestellt werden.

Die elektrische Verschaltung ist zumindest durch eine Stromschiene bereitgestellt ist, denn solche Stromschienen lassen sich bei geeigneter Anordnung der Lithium-Ionen-Batteriezellen in dem Modul sehr einfach vorsehen und insbesondere auch in den Aufbau integrieren, z. B. durch eine Vergussmasse ebenfalls festhalten. Stromschienen erlauben auch eine größere Variabilität bei der Festlegung der Art des Anschlusses.

Bei dem erfindungsgemäßen Modul sind zumindest zwei Lithium-Ionen-Batteriezellen in einem Gehäuse bei einer Sollstellung (für ein Kraftfahrzeug in einer Solleinbaulage) desselben übereinander angeordnet. Zwei Stromschienen verlaufen von der Oberseite der einen dieser beiden Lithium-Ionen-Batteriezellen zu der Oberseite der anderen der beiden Lithium-Ionen-Batteriezellen.

Bei einer einfachen Ausführungsform sind die Lithium-Ionen-Batteriezellen in dem Gehäuse angeordnet, in das zur Stabilisierung der Lithium-Ionen-Batteriezellen eine Vergussmasse eingebracht ist. Dadurch, dass die Vergussmasse den Raum zwischen den Gehäusewänden und den Wänden der Lithium-Ionen- Batteriezellen ausfüllen kann, ist für eine stabile Anordnung gesorgt, und es können sogar je nach Modul unterschiedliche Arten von Lithium-Ionen- Batteriezellen von unterschiedlichen Herstellern verwendet werden, die auch in ihrer Größe voneinander abweichen können, solange die Lithium-Ionen- Batteriezellen in der gewünschten Anzahl in das Gehäuse passen.

Bei einfach baubaren Ausführungsformen eines weiteren Moduls haben die Lithium-Ionen-Batteriezellen einen rechteckigen Querschnitt. Eine im Rechteck längere Seite einer jeweiligen Lithium-Ionen- Batteriezelle liegt einer im Rechteck längeren Seite einer benachbarten Lithium-Ionen- Batteriezelle gegenüber. Zwei Stromschienen laufen dann parallel zu den in den Rechtecken kürzeren Seiten entlang. Ein solches Modul ist besonders einfach aufbaubar und herstellbar. Und auch leicht anschließbar.

Die Anschließbarkeit kann beinhalten, dass die Anschlüsse an den Stromschienen in Verlängerung der im Rechteck kürzeren Seiten angeordnet, alternativ hierzu ist es aber auch möglich, dass die Anschlüsse an den Stromschienen in Verlängerung der im Rechteck längeren Seiten angeordnet sind.

Weitere Ausführungsformen können vorteilhaft sein, um das Modul geeignet anzuschließen; es kommt darauf an, an welcher Seite des Moduls ein anderes Modul angeordnet werden soll, das anzuschließen ist. Beim Bauen einer Energieversorgungseinrichtung wird man einmal auf die eine Art von Modul zurückgreifen, ein andermal auf die andere Art von Modul.
In einem Kraftfahrzeug mit einem elektrischen Antrieb und einer Mehrzahl von Modulen finden diese Module ihre bestimmungsgemäße Anwendung in besonders vorteilhafter Weise, weil der Bauraum des Kraftfahrzeugs zur Bereitstellung einer Hochvoltbatterie (Energieversorgungseinrichtung) mit besonders hoher, bezüglich des Bauraums optimaler Kapazität bei der gewünschten Spannung besonders leicht bereitgestellt werden kann.

Die in einem Kraftfahrzeug verbauten Module können hierbei von unterschiedlicher Art sein.

Nachfolgend werden bevorzugte Ausführungsformen der Erfindung unter Bezug auf die Zeichnungen näher beschrieben, in der
- Fig. 1: eine Draufsicht auf ein Modul mit fünf parallel zueinander geschalteten Lithium-Ionen-Batteriezellen veranschaulicht,
- Fig. 2: einen Schnitt durch das Modul aus Fig. 1 veranschaulicht,
- Fig. 3: die Verschaltung der Lithium-Ionen-Batteriezellen des Moduls aus Fig. 1 und Fig. 2 veranschaulicht,
- Fig. 4: ein weiteres Modul mit drei parallel zueinander geschalteten Lithium-Ionen-Batteriezellen veranschaulicht, bei der die Anschlüsse an einer anderen Stelle liegen als bei dem Modul gemäß Fig. 1,
- Fig. 5: eine Ausführungsform eines erfindungsgemäßen Moduls mit übereinander angeordneten Lithium-Ionen-Batteriezellen veranschaulicht und
- Fig. 6: die Kopplung zweier Module zu einem weiteren, neuen Modul veranschaulicht.

Eine erstes Modul 10 umfasst ein Gehäuse 12, in dem vorliegend fünf Lithium-lonen-Batteriezellen 14 angeordnet sind. Hierbei weisen elektrische Anschlüsse 16, 18 der einzelnen Lithium-Ionen-Batteriezellen zur Oberseite hin. In der Draufsicht haben die Lithium-Ionen-Batteriezellen 14 einen rechteckigen Querschnitt, wobei sie derart in dem Gehäuse 12 angeordnet sind, dass sich die jeweils kürzeren Seiten 20 des Rechtecks aneinander anschließen, also die jeweils längeren Seiten 22 des Rechtecks einander gegenüberliegen. Bei derart angeordneten Lithium-Ionen-Batteriezellen ist in das Gehäuse 12 eine Vergussmasse 24 eingebracht, die man hat aushärten lassen. Auf diese Weise sind die Lithium-Ionen-Batteriezellen 14 fest in dem Gehäuse 12 gehalten, unabhängig von ihrer Größe, die je nach Hersteller unterschiedlich ausfallen kann.

In die Vergussmasse 24 integriert sind zwei Stromschienen 26, 28, die jeweils über alle Kontakte 16 aller Lithium-Ionen-Batteriezellen 14 (Stromschiene 26) bzw. über alle Kontakte 18 der Lithium-Ionen-Batteriezellen 14 verlaufen (Stromschiene 28).

Außerhalb des Gehäuses 12 befindet sich sodann eine Anschlussmöglichkeit 30, 32 zum Kontaktieren der Stromschienen 26, 28.

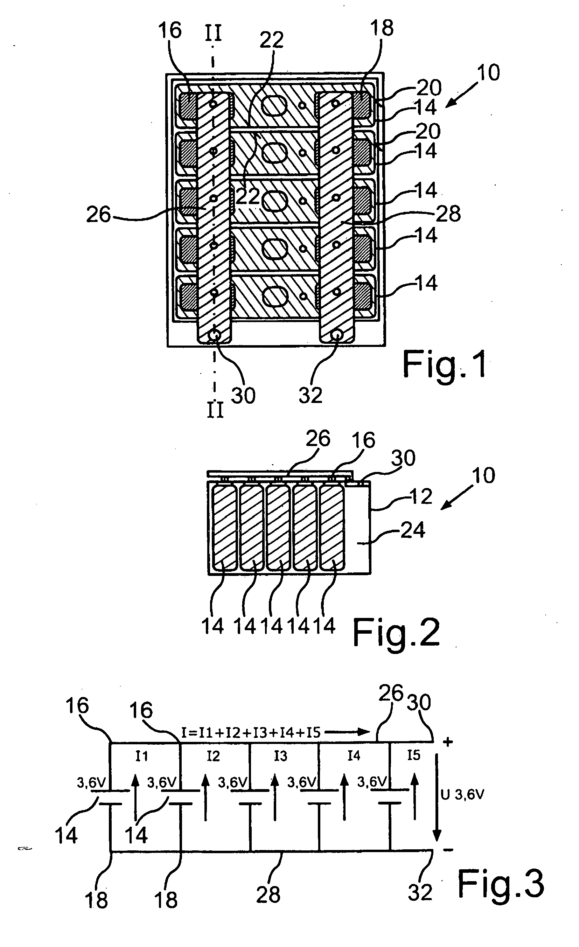

So ist daher eine Parallelschaltung von Lithium-Ionen- Batteriezellen realisiert. Beispielsweise haben diese, wie in Fig. 3 gezeigt, jeweils eine Nennspannung von 3,6 V und erlauben es, einen Strom Iᵢ abzugeben, wobei i eine Nummerierung der Lithium-Ionen-Batteriezellen betrifft, i = 1 bis 5.

Somit erhöht sich durch die Parallelschaltung der Lithium-Ionen-Batteriezellen 14 die gesamte Kapazität, denn der gesamte, von dem Modul abgebbare Strom I ist genau die Summe aller Einzelströme, I = I₁ + I₂ + + I₄ + I₅. Die Nennspannung des Moduls bleibt hierbei gleich der Nennspannung der einzelnen Lithium-Ionen-Batteriezellen 14.

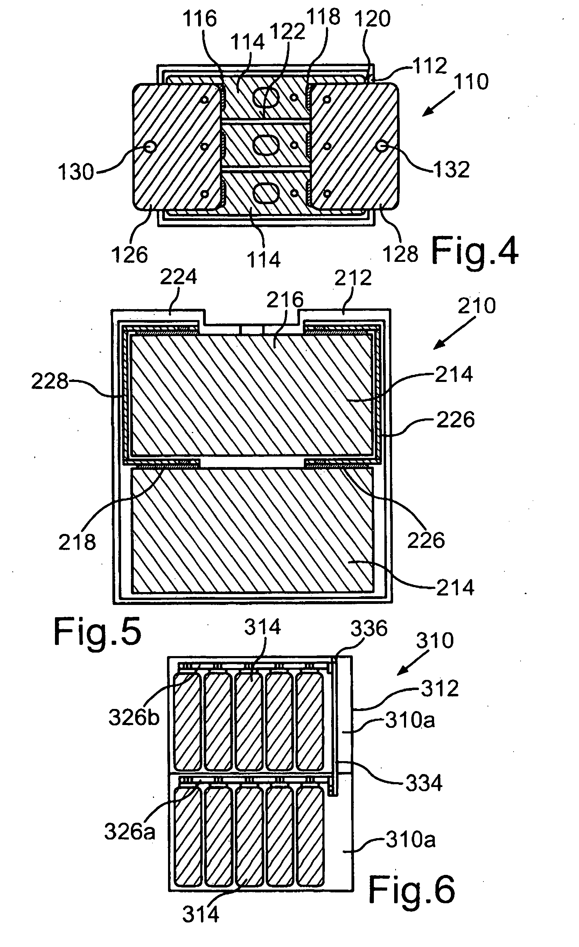

Alternativ zum Bereitstellen der Anschlüsse 30, 32 in Verlängerung des Verlaufs der Stromschienen 26, 28 können, wie in Fig. 4 zu sehen, bei gleicher Anordnung bei einem Modul 110 die auf den Kontakt 116, 118 der Lithium-Ionen-Batteriezellen 114 sitzenden Stromschienen 126, 128 etwas verbreitert ausgeführt sein, sodass sich seitlich, also in Verlängerung der längeren Seiten 122 der Rechteckform Anschlüsse 130, 132 ergeben.

Bei einer Ausführungsform des erfindungsgemäßen Moduls mit dem Modul 210 sind zwei Lithium-Ionen-Batteriezellen 214 übereinander angeordnet, und ein Kontakt 216 ist mit einer Stromschiene 226 gekoppelt, die den Kontakt 216 der darüber liegenden Lithium-Ionen-Batteriezelle kontaktiert. Die Stromschiene 226, genauso wie die korrespondierende Stromschiene 228, ist um den Körper der oberen Lithium-Ionen-Batteriezelle 214 herumgeführt. Beide Lithium-Ionen-Batteriezellen 214 sind auch hier zusammen mit den Stromschienen 226, 228 in einem Gehäuse 212 angeordnet, in das eine Vergussmasse 224 eingebracht ist.

Aus dem dem Modul 10 ähnlichen zwei Moduleinheiten 310a, 310b lässt sich auch ein zusammengesetztes Modul 310 gemäß einer weiteren Ausführungsform der Erfindung bauen. Anders als bei dem Modul 10 aus Fig. 1 und Fig. 2 ist hierbei statt des Anschlusses 30 beim unteren Modul eine nach oben führende Stromschiene 334 vorgesehen, die die beiden Stromschienen 326a, 326b miteinander koppelt. Am oberen Ende der Stromschiene 334 ist sodann ein Anschluss 336 für das gesamte Modul 310 vorgesehen.

## Patentansprüche

1. Verfahren zum Bauen einer Energieversorgungseinrichtung (10, 110, 210, 310) mit einer Mehrzahl von Lithium-Ionen-Batteriezellen (14, 114, 214, 314),
wobei Teilgruppen der Lithium-Ionen-Batteriezellen jeweils zu einem Modul (10, 110, 210, 310) zusammengefasst werden, in welchem Lithium-Ionen-Batteriezellen der Teilgruppe miteinander mechanisch verbunden und hierbei parallel zueinander geschaltet sind, wobei alle Module (10, 110, 210, 310) miteinander gekoppelt werden, um die Energieversorgungseinrichtung zu bilden,
wobei zumindest zwei Lithium-Ionen-Batteriezellen (214) des Moduls (10, 110, 210, 310) in einem Gehäuse (212) in einer Sollstellung desselben übereinander angeordnet werden, und wobei die elektrische Verschaltung mittels zumindest einer Stromschiene (26, 28, 126, 128, 226, 228, 326a, 326b, 334) bereitgestellt wird,
**dadurch gekennzeichnet, dass**
zwei Stromschienen (226, 228) von der Oberseite der einen dieser beiden Lithium-lonen-Batteriezellen (214) zu der Oberseite der anderen der beiden Lithium-Ionen-Batteriezellen (214) verlaufend angeordnet werden.

2. Verfahren nach Anspruch 1,
**dadurch gekennzeichnet, dass**
die Energieversorgungseinrichtung Teil eines Kraftfahrzeugs ist.

3. Modul (10, 110, 210, 310) aus einer Mehrzahl von Lithium-Ionen-Batteriezellen (14, 114, 214, 314), welche miteinander mechanisch verbunden sind und hierbei elektrisch parallel geschaltet sind, wobei die elektrische Verschaltung mittels zumindest einer Stromschiene (26, 28, 126, 128, 226, 228, 326a, 326b, 334) bereitgestellt ist, wobei zumindest zwei Lithium-Ionen-Batteriezellen (214) in einem Gehäuse (212) in einer Sollstellung desselben übereinander angeordnet sind,
**dadurch gekennzeichnet, dass**,
zwei Stromschienen (226, 228) von der Oberseite der einen dieser beiden Lithium-Ionen-Batteriezellen (214) zu der Oberseite der anderen der beiden Lithium-Ionen-Batteriezellen (214) verlaufen.

4. Modul (10, 110, 210, 310) nach Anspruch 3,
**dadurch gekennzeichnet, dass**
die Lithium-Ionen-Batteriezellen (14, 114, 214, 314) in dem Gehäuse (12, 112, 212, 312) angeordnet sind, in welches eine Vergussmasse (24, 224, 324) eingebracht ist.

5. Kraftfahrzeug mit einem elektrischen Antrieb, zumindest einem Modul (10, 110, 210, 310) nach einem der Ansprüche 3 bis 4 und zumindest einem weiteren Modul aus einer Mehrzahl von Lithium-Ionen-Batteriezellen (14, 114, 214, 314), welche miteinander mechanisch verbunden sind und hierbei elektrisch parallel geschaltet sind, wobei die elektrische Verschaltung mittels zumindest einer Stromschiene (26, 28, 126, 128, 226, 228, 326a, 326b, 334) bereitgestellt ist.

6. Kraftfahrzeug nach Anspruch 5, wobei die Lithium-Ionen-Batteriezellen des zumindest einen weiteren Moduls (10, 110, 210, 310) einen rechteckigen Querschnitt haben, wobei eine im Rechteck längere Seite (22, 122) einer jeweiligen Lithium-Ionen-Batteriezelle (14, 114) einer im Rechteck längeren Seite (22, 122) einer benachbarten Lithium-Ionen-Batteriezelle (14, 114) gegenüber liegt und zwei Stromschienen (26, 28, 126, 128) parallel zu der in den Rechtecken kürzeren Seite (20, 120) verlaufen.

7. Kraftfahrzeug nach Anspruch 6,
**dadurch gekennzeichnet, dass**
Anschlüsse (30, 32) an den Stromschienen (26, 28) in Verlängerung der im Rechteck kürzeren Seiten (20) angeordnet sind.

8. Kraftfahrzeug nach Anspruch 6,
**dadurch gekennzeichnet, dass** Anschlüsse (130, 132) an den Stromschienen (126, 128) in Verlängerung der im Rechteck längeren Seiten (122) angeordnet sind.

## Claims

1. Method for constructing an energy supply device (10, 110, 210, 310) comprising a plurality of lithium-ion battery cells (14, 114, 214, 314), subgroups of the lithium-ion battery cells each being combined to form a module (10, 110, 210, 310) in which lithium-ion battery cells of the subgroup are mechanically interlinked and connected in parallel with one another in this case, all the modules (10, 110, 210, 310) being coupled to one another in order to form the energy supply device,
at least two lithium-ion battery cells (214) of the module (10, 110, 210, 310) being arranged one on top of the other in a housing (212) when said housing is in a target position, and the electrical connection being established by at least one busbar (26, 28, 126, 128, 226, 228, 326a, 326b, 334),
**characterised in that**
two busbars (226, 228) are arranged so as to extend from the top side of one of said two lithium-ion battery cells (214) to the top side of the other of the two lithium-ion battery cells (214).

2. Method according to claim 1,
**characterised in that**
the energy supply device is part of a motor vehicle.

3. Module (10, 110, 210, 310) consisting of a plurality of lithium-ion battery cells (14, 114, 214, 314) which are mechanically interlinked and electrically connected in parallel in this case, the electrical connection being established by at least one busbar (26, 28, 126, 128, 226, 228, 326a, 326b, 334), at least two lithium-ion battery cells (214) being arranged one on top of the other in a housing (212) when said housing is in a target position, **characterised in that** two busbars (226, 228) extend from the top side of one of said two lithium-ion battery cells (214) to the top side of the other of the two lithium-ion battery cells (214).

4. Module (10, 110, 210, 310) according to claim 3,
**characterised in that**
the lithium-ion battery cells (14, 114, 214, 314) are arranged in the housing (12, 112, 212, 312) into which a casting compound (24, 224, 324) is introduced.

5. Motor vehicle comprising an electric drive, at least one module (10, 110, 210, 310) according to either claim 3 or claim 4, and at least one additional module consisting of a plurality of lithium-ion battery cells (14, 114, 214, 314) which are mechanically interlinked and electrically connected in parallel in this case, the electrical connection being established by means of at least one busbar (26, 28, 126, 128, 226, 228, 326a, 326b, 334).

6. Motor vehicle according to claim 5, wherein the lithium-ion battery cells of the at least one additional module (10, 110, 210, 310) have a rectangular cross section, wherein a longer side (22, 122) of the rectangle of a respective lithium-ion battery cell (14, 114) is opposite a longer side (22, 122) of the rectangle of an adjacent lithium-ion battery cell (14, 114) and two busbars (26, 28, 126, 128) extend in parallel with the shorter side (20, 120) of the rectangle.

7. Motor vehicle according to claim 6,
**characterised in that**
connections (30, 32) to the busbars (26, 28) are arranged in the extension of the shorter sides (20) of the rectangle.

8. Motor vehicle according to claim 6,
**characterised in that** connections (130, 132) to the busbars (126, 128) are arranged in the extension of the longer sides (122) of the rectangle.

## Revendications

1. Procédé de construction d'un dispositif d'alimentation en énergie (10, 110, 210, 310) comprenant une pluralité d'éléments de batterie à ions de lithium (14, 114, 214, 314),
dans lequel des groupements partiels des éléments de batterie à ions de lithium sont regroupés respectivement en un module (10, 110, 210, 310), dans lequel des éléments de batterie à ions de lithium du groupement partiel sont reliés mécaniquement les uns aux autres et sont commutés en l'occurrence mutuellement en parallèle, dans lequel tous les modules (10, 110, 210, 310) sont couplés l'un à l'autre pour former le dispositif d'alimentation en énergie,
dans lequel au moins deux éléments de batterie à ions de lithium (214) du module (10, 110, 210, 310) sont aménagés l'un sur l'autre dans un boîtier (212) en position théorique de celui-ci et dans lequel la commutation électrique est assurée au moyen d'au moins une barre omnibus (26, 28, 126, 128, 226, 228, 326a, 326b, 334),
**caractérisé en ce que** :
deux barres omnibus (226, 228) sont aménagées de manière à s'étendre de la partie supérieure du premier de ces deux éléments de batterie à ions de lithium (214) à la partie supérieure de l'autre des deux éléments de batterie à ions de lithium (214) .

2. Procédé selon la revendication 1,
**caractérisé en ce que** :
le dispositif d'alimentation en énergie fait partie d'un véhicule automobile.

3. Module (10, 110, 210, 310) constitué d'une pluralité d'éléments de batterie à ions de lithium (14, 114, 214, 314), qui sont reliés mécaniquement l'un à l'autre et sont en l'occurrence commutés électriquement en parallèle, dans lequel la commutation électrique est assurée à l'aide d'au moins une barre omnibus (26, 28, 126, 128, 226, 228, 326a, 326b, 334), dans lequel au moins deux éléments de batterie à ions de lithium (214) sont aménagés l'un sur l'autre dans un boîtier (212) en position théorique de celui-ci,
**caractérisé en ce que** :
deux barres omnibus (226, 228) s'étendent de la partie supérieure du premier de ces deux éléments de batterie à ions de lithium (214) à la partie supérieure de l'autre des deux éléments de batterie à ions de lithium (214).

4. Module (10, 110, 210, 310) selon la revendication 3,
**caractérisé en ce que** :
les éléments de batterie à ions de lithium (14, 114, 214, 314) sont aménagés dans le boîtier (12, 112, 212, 312), auquel est incorporé une masse de remplissage (24, 224, 324).

5. Véhicule automobile équipé d'un entraînement électrique, d'au moins un module (10, 110, 210, 310) selon l'une quelconque des revendications 3 à 4 et d'au moins un autre module constitué d'une pluralité d'éléments de batterie à ions de lithium (14, 114, 214, 214), qui sont reliés mécaniquement l'un à l'autre et sont commutés en l'occurrence électriquement en parallèle, dans lequel la commutation électrique est assurée au moyen d'au moins une barre omnibus (26, 28, 126, 128, 226, 228, 326a, 326b, 334).

6. Véhicule automobile selon la revendication 5, dans lequel les éléments de batterie à ions de lithium du au moins un autre module (10, 110, 210, 310) ont une section transversale rectangulaire, dans lequel un côté long (22, 122) du rectangle d'un élément de batterie à ions de lithium respectif (14, 114) est en regard d'un côté long du rectangle (22, 122) d'un élément de batterie à ions de lithium voisin (14, 114) et deux barres omnibus (26, 28, 126, 128) s'étendent parallèlement aux côtés courts des rectangles (20, 120).

7. Véhicule automobile selon la revendication 6 :
**caractérisé en ce que** :
des connexions (30, 32) sont agencées dans les barres omnibus (26, 28) dans le prolongement des côtés courts (20) du rectangle.

8. Véhicule automobile selon la revendication 6, car
actérisé en ce que des connexions (130s 132) sont aménagées sur les barres omnibus (126, 128) dans le prolongement des côtés longs (122) du rectangle.
